# EUROPEAN PATENT SPECIFICATION

(11) **EP 1 784 688 B1**
(45) Date of publication and mention of the grant of the patent: **27.02.2013**
(21) Application number: 05781224.0
(22) Date of filing: 31.08.2005
(51) Int. Cl.: G03B 21/62, G02B 26/08

(54) **Rear projection screen**
Rückprojektionsschirm
Ecran de rétroprojection

(30) Priority: 04.09.2004 KR 2004070627; 04.09.2004 KR 2004070629; 04.09.2004 KR 2004070628
(43) Date of publication of application: 16.05.2007
(73) Proprietor: LG Chemical Co., Ltd., Seoul 150-721 (KR); Insideoptics Co., Ltd., Seongbuk-gu,@Seoul 136-828 (KR)
(72) Inventor: YOON, Kyung-Joon, 103-1305, Seawon2cha APT., Cheongju-si, Chungcheongbuk-do, 361-260 (KR); KIM, Han-Pil, 103ho, 2580, Cheongju-si, Chungcheongbuk-do, 361-300 (KR); LEE, Geun-Hee, 101-1205, Daewon APT., 1511, Cheongju-si, Chungcheongbuk-do, 361-260 (KR); KIM, Wook, 302, Hyosinvilla, 682-1, Seoul, 135-081 (KR); BYUN, Seok-Joo, 809-2202, Hyundaidaewoo APT., Cheongju-si, Chungch eongbuk-do, 361-201 (KR)
(74) Representative: HOFFMANN EITLE
(86) International application number: PCT/KR2005/002876
(87) International publication number: WO 2006/028334

(56) References cited:
- WO-A1-2004/031853
- JP-A- 05 072 634
- JP-A- 58 055 921
- JP-A- 59 088 723
- JP-A- 62 010 637
- JP-A- 63 139 331
- JP-A- 2000 221 603
- JP-A- 2001 004 808
- US-A- 4 432 608
- US-A- 4 512 631

## Description

### Technical Field

The present invention relates to a rear projection screen, and more particularly, to a rear projection screen in which an image from a projector is transferred from a rear surface thereof and refracted through an optical sheet with fine prisms formed thereon, and then diffused on a diffusion layer of an optical film formed on a front surface thereof to enable an observer to view the image through the front surface.

### Background Art

A projection screen is widely used for displaying a projection image from a projector and the like. Such a projection screen includes a transmissive rear projection screen and a reflective projection screen. This projection screen requires the following two significant factors. First, there should be little surface reflection of external light (sunlight or surrounding light) at an observer side such that a surface reflection image is not created. Second, a black level should be secured such that a high contrast ratio can be obtained.

The present invention is directed to a transmissive projection screen for displaying a projection image from a projector onto an inner surface of a show window or glass window. That is, an image from the projector is projected onto a rear surface of the screen. This type of screen has been put to practical use as a transmissive rear projection screen for displaying a notice, an advertisement, image information, etc. thereon.

However, there is a problem in the conventional rear projection screen in that an observer cannot view the image against the strength of external light or a reflection image formed on a glass window surface and the projection image seen from the observer side comes to be an unclear image with weak contrast, under bright light such as sunlight.

The conventional rear projection screen is a multiple sheet screen comprising a light diffusion facing a projector and a fine prism optical sheet for refracting light from the projector toward the front of the rear projection screen. In the rear projection screen, ink with a light-shielding characteristic has been printed on upper surfaces of fine prisms to overcome contrast reduction caused by the external light. However, it is difficult to manufacture the rear projection screen due to difficulty in printing the ink with a light-shielding characteristic on the upper surfaces of the fine prisms. Further, since the light from the projector is first diffused through the diffusion layer and then refracted through the fine prism optical sheet toward the observer side, the light loss is produced due to a light-shielding printed layer formed on a front surface of the screen, whereby luminance of the screen is lowered.

Furthermore, a image display device in which the conventional LED lamps are arranged on a displaying area is widely used as a large-sized image display device, but it is very expensive and it takes a great deal of time to install this image display device.

WO-2004/031853A discloses a rear projection screen according to the preamble of claim 1. A related device is known from JP-05 072 634A.

### Disclosure of Invention

### Technical Problem

Accordingly, the present invention is conceived to solve the aforementioned problems. The object of the present invention is to provide a novel rear projection screen wherein there is no image reflected from a surface of the screen at an observer side and an extremely precise color image with a high black level can be obtained even under a bright environment such as the presence of sunlight light from a projector is first refracted through a fine prism optical sheet toward the front of the screen and then diffused through a light diffusion layer such that light loss can be reduced to thereby enhance the luminance of the screen; and ink with a light-shielding characteristic is printed on the flat light diffusion layer to allow the screen to be easily manufactured such that the large-sized screen can be manufactured at a low cost.

At the same time, the rear projection screen shall be capable of preventing the occurrence a ghost phenomenon from occurring with the use of an optical sheet comprising fine prisms with continuously variable angles in a vertical direction.

Preferably, the rear projection screen shall also be capable of having a wider viewing angle with the use of fine a spherical lens layers.

### Technical Solution

The above object of the present invention is achieved by a rear projection screen for allowing an observer to view an image at a front side by receiving light projected at a rear side, comprising a transparent plate; an optical sheet which is hot-pressed on the rear surface of the transparent plate and includes a plurality of fine prisms formed from side to side and parallel to one another to refract the light and guide the refracted light to the front side, each fine prism protruding to the rear side; a diffusion film which is bonded to the front surface of the transparent plate and includes a transparent film and diffusion layers formed on front and rear surfaces of the transparent film to omni directionally disperse and diffuse the light refracted through the optical sheet; and light-shielding printed layers which are formed on the front side surface of the diffusion layer to be horizontally parallel to one another and face portions between the fine prisms of the optical sheet,

wherein the fine prisms are different-angle fine prisms of which the angles defined with respect to the rear surface of the transparent plate consecutively vary within a range of 5 to 65 degrees in a vertical direction to form a gradient as a whole.

Preferably, the screen has fine a spherical lens layers formed to be elongated between the light-shielding printed layers.

Further, the fine prisms are different-angle fine prisms of which the angles defined with respect to the rear surface of the transparent plate consecutively vary within a range of 5 to 65 degrees in a vertical direction to form a gradient as a whole.

Preferably, the diffusion layer of the diffusion film is formed by coating and drying a solution with white powder and an acrylic binder mixed therein.

More preferably, the white powder is selected from the group consisting of titanium dioxide, silica, calcium carbonate, aluminum hydroxide, or a combination thereof.

### Advantageous Effects

In the rear projection screen according to the present invention described above, there is no reflected image on a surface on the side of an observer even under a bright environment such as the presence of sunlight, and a extremely precise color image with a high black level can be obtained.

Further, light emitted from a projector is first refracted through a fine prism optical sheet and then diffused so that a large-sized screen with less light loss can be manufactured at a low cost.

Moreover, the present invention has advantages in that the occurrence of a ghost phenomenon is prevented with the use of different-angle fine prisms, and a wider viewing angle can be secured with the use of fine a spherical lens layers.

### Brief Description of the Drawings

The above and other objects, features and advantages of the present invention will become apparent from the following descriptions of preferred embodiments given in conjunction with the accompanying drawings, in which:

Fig. 1 is a view illustrating an installation example of a rear projection screen according to the embodiment of the present invention;

Fig. 2 is a vertical sectional view of a rear projection screen according to a first embodiment of the present invention;

Fig. 3 is a vertical sectional view of a rear projection screen according to a second embodiment of the present invention;

Fig. 4 is a vertical sectional view of a rear projection screen according to a third embodiment of the present invention;

Fig. 5 is a vertical sectional view of a rear projection screen according to a fourth embodiment of the present invention;

Fig. 6 is a view showing the configuration and operation of a fine prism optical sheet of the rear projection screen according to the embodiment of the present invention;

Fig. 7 is a view showing the configuration and operation of light-shielding printed layers of the rear projection screen according to the embodiment of the present invention;

Fig. 8 is a vertical sectional view of a different-angle fine prism optical sheet applied to the rear projection screen according to the second and fourth embodiments of the present invention;

Fig. 9 is a view showing a path of light projected onto the rear projection screen according to the third embodiment of the present invention;

Fig. 10 is a perspective view of a fixed-angle fine prism optical sheet applied to the rear projection screen according to the first and third embodiments of the present invention; and

Fig. 11 is a perspective view of a different-angle fine prism optical sheet applied to the rear projection screen according to the second and fourth embodiments of the present invention.

### Mode for the Invention

Hereinafter, preferred embodiments of the present invention will be described in detail with reference to the accompanying drawings.

Although the preferred embodiments described herein and illustrated in the accompanying drawings have been provided for the purpose of general understanding of the present invention, it should be understood that the embodiments are merely described for illustrating the present invention and the present invention is not limited there to. In addition, detailed descriptions on known functions and constitutions, which may make the scope of the present invention unnecessarily obscure, will be omitted herein.

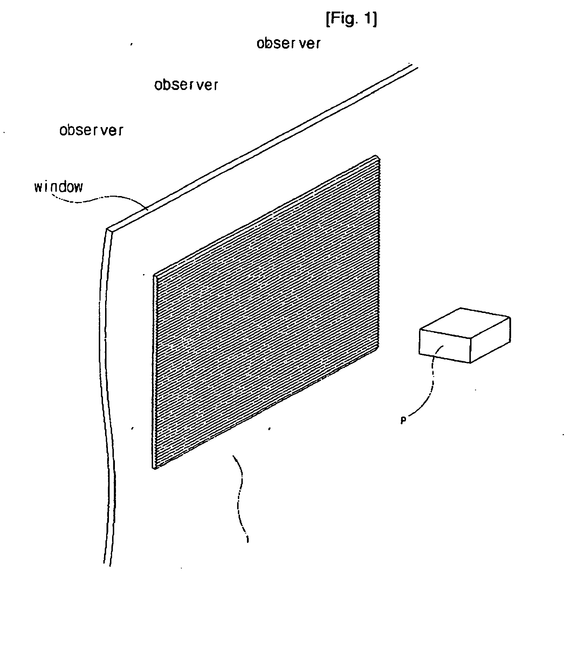

Fig. 1 is a view showing an arrangement of a rear projection screen according to the embodiment of the present invention, in which reference numeral 1 designates the rear projection screen according to the preferred embodiment of the present invention and reference numeral P designates a projector for emitting light constituting an image.

As shown in the figure, observers are located outside of a window (a show window) and the rear projection screen 1 according to the embodiment of the present invention is installed indoor near the window. Further, the projector P for emitting the light constituting the image is installed on the ceiling above a position which is spaced apart rearward from the screen 1. Accordingly, the observers can view outdoors the image displayed on the screen 1 through the window.

[The first embodiment]

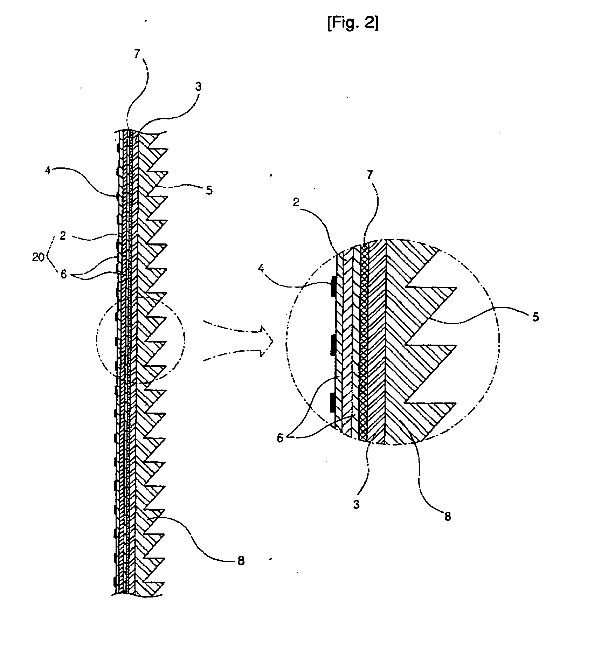

Fig. 2 is a longitudinal sectional view of a rear projection screen according to a first embodiment not forming a part of the present invention. The rear projection screen 1 according to the first embodiment comprises a transparent plate 3 with a thickness of 50 - 150 µm an optical sheet 8 that has a thickness of 250 - 500 µm, is hot-pressed on a rear surface of the transparent plate 3 and comprises a plurality of fixed-angle fine prisms 5 arranged continuously from side to side and parallel to one another to refract light and guide the refracted light forward and formed to protrude rearward and to have the same shape and size of 50 - 500 µm (the size of the base of a triangular section or a distance between corners of adjacent fine prisms); a diffusion film 20 that has a thickness of 50 - 150 µm is bonded to a front surface of the transparent plate 3, and comprises a transparent film 2 and diffusion layers 6 formed on front and rear surfaces of the transparent film to omni directionally disperse and diffuse the light refracted through the optical sheet 8; and light-shielding printed layers 4 that are formed on an upper surface of the diffusion layer 6 to be horizontally parallel to one another at positions between the fixed-angle fine prisms 5 of the optical sheet 8 and to have a thickness of 10 - 15µm.

It is preferred that the transparent plate 3 be made of a material with high light transmittance, such as a polymethyl methacrylate (PMMA) sheet. Further, it is preferred that the transparent film 2 and the optical sheet 8 be made of a flexible material so that the entire rear projection screen 1 of the present invention can be rolled upward and then stored.

However, a bonding layer 7 between the transparent plate 3 and the diffusion film 20 may be an adhesive layer formed of an adhesive. In this case, the diffusion film 20 and the optical sheet 8 can be detachably attached with respect to the transparent plate 3. Thus, a pane of a window may used directly as the transparent plate 3, the diffusion film 20 formed with the diffusion layer 6 and the light-shielding printed film 20 may be adhered to an outer side of the window, and the optical sheet 8 with the fine prisms 5 formed thereon may be adhered or bonded to an inner side of the window using an additional adhesive or bonding agent. This resultant combination can serve as the rear projection screen 1.

Moreover, the diffusion layer 6 provided on the diffusion film 20 is formed by coating and drying a solution with white powder and an acrylic binder mixed therein, which is a conventional method. A material such as polyethylene terephthalate (PET) or polycarbonate (PC) can be used as the transparent plate 3.

A material selected from the group consisting of titanium dioxide, silica, calcium carbonate, aluminum hydroxide, or a combination thereof can be used as the white powder.

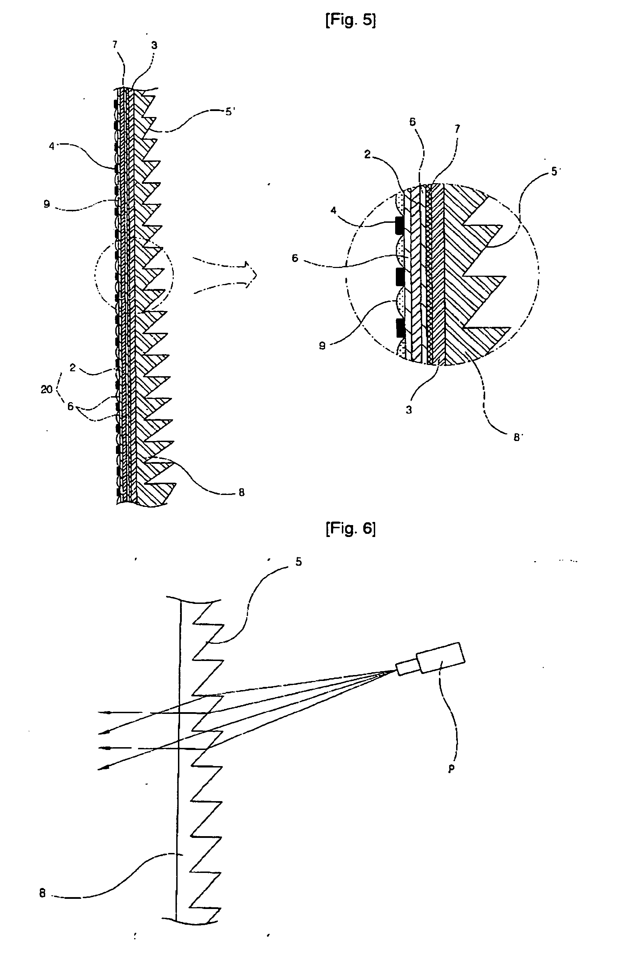

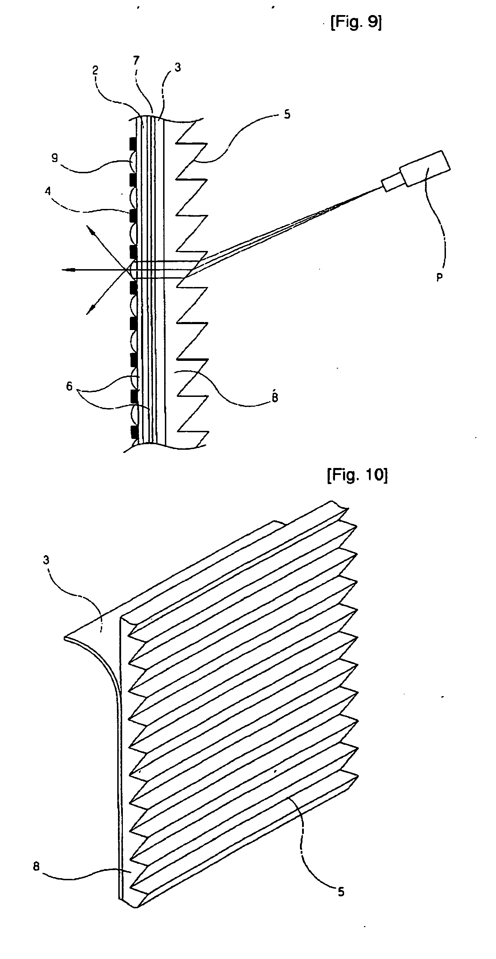

Fig. 6 is a view showing the fine prism optical sheet of the rear projection screen according to the embodiment of the present invention and the operation thereof, and Fig. 10 is a perspective view of a fixed-angle fine prism optical sheet applied to the rear projection screen according to first and third embodiments not forming a part of the present invention. It can be seen from Figs. 6 and 10 that light emitted from the projector P is refracted by the fine prisms 5 of the optical sheet 8 and travels toward the transparent plate 3, and that the prisms 5 with the same shape and size (the size of the base of the triangular section or a distance between corners of adjacent fine prisms is 50 - 500 µm) are arranged continuously on the optical prism 8.

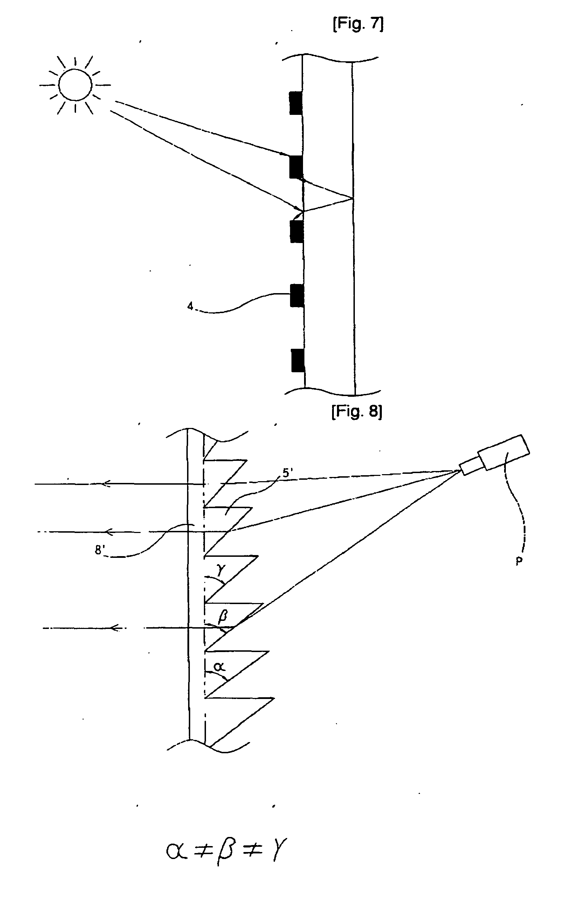

Further, Fig. 7 is a view showing the light-shielding printed layers of the rear projection screen according to the embodiment of the present invention and the operation thereof. Sunlight (external light) is not reflected on a front surface of the rear projection screen **1** according to the embodiment of the present invention but is absorbed mostly by the light-shielding printed layers 4, thereby preventing a phenomenon in which an observer cannot properly view an image due to reflected light.

As described above, since the light-shielding printed layers 4 are arranged not to face the fine prisms 5 but to face portions between the fine prisms, they do not intercept the light refracted by the fine prisms 5. Accordingly, the light refracted by the fine prisms 5 diffuses through the diffusion layer6 with the light-shielding layers 4 formed on the upper surface thereof. Thus, when an image is formed, a combination of dense linear image components implements one image.

That is, the light emitted from the projector P is first refracted by the fine prisms 5 of the optical sheet 8 and then passes through the transparent plate 3. The light passing through the transparent plate 3 makes an image on the white diffusion layer 6 of the diffusion film 20. Thus, light loss is reduced and luminance is improved. Since the diffusion layer 6 is arranged in front of the fine prisms 5, an image projected from the projector P optically diffuses widely so that an observer can be provided with an image with a wide viewing angle.

[The second embodiment]

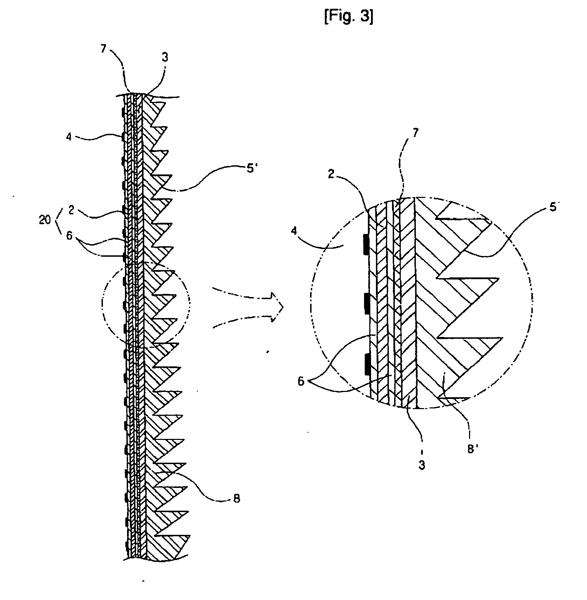

Fig. 3 is a vertical sectional view of a rear projection screen according to a second embodiment according to the present invention. The structure of this embodiment is identical with that of the first embodiment except that the angles, and of fine prisms 5' of an optical plate 8'with respect to a rear surface of the transparent plate 3 consecutively vary within a range of 5 to 65 degrees in a vertical direction to form a gradient asa whole so that the light emitted from the projector P is precisely (uniformly) refracted to be directed forward, thereby preventing a ghost phenomenon.

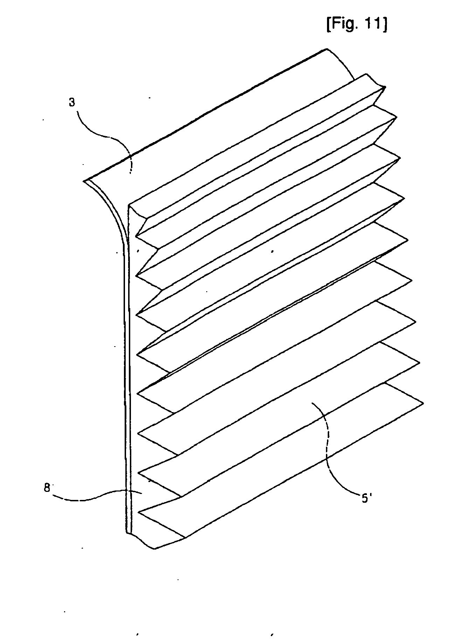

Fig. 8 is a view of a different-angle fine prism optical sheet applied to rear projection screens according to second and fourth embodiments of the present invention, and Fig. 11 is a perspective view of the different-angle fine prism optical sheet. It can be seen that the light emitted from the projector P is refracted by the different-angle fine prisms 5' of the optical sheet 8', the prisms 5' are arranged at regular intervals on the optical sheet 8, and the angles , and of the fine prisms 5' defined with respect to a rear surface of the transparent plate 3 vary consecutively to form a gradient as a whole. In this embodiment, the relationship α>β>γ is established so that lower ones of the fine prisms 5' further protrude and thus a lower portion of the optical sheet 8 becomes thicker, resulting in an inclined screen 1 with a gradient as a whole.

With the use of the different-angle fine prisms 5', the light emitted from the projector P, which is a point light source, can be refracted to be more precisely directed forward. The reason is that the incident angle of the light emitted from the point light source onto the screen 1 consecutively varies according to the position of the point light source and a position on the screen 1, and thus, the angle of each of the fine prisms 5' should vary according to the varying incident angle of the light in order to ensure that the light can be refracted at different-angles at all positions and then directed forward. This makes an image on the screen 1 brighter, resulting in improved luminance, and also prevents the occurrence of the ghost phenomenon that may be generated upon use of the fixed-angle fine prism 5.

[The third embodiment]

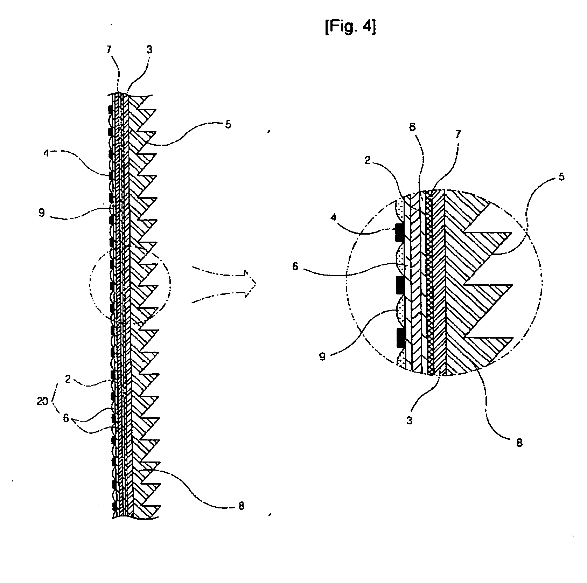

Fig. 4 is a vertical sectional view of a rear projection screen according to a third embodiment not forming a part of the present invention. The structure of this embodiment is identical with that of the first embodiment except that fine a spherical lens layers 9 are formed to be elongated laterally between the light-shielding printed layers 4.

Fig. 9 is a view showing a path of light projected on the rear projection screen according to the third embodiment. The light emitted from the projector P is refracted by the fine prisms 5 of the optical sheet 8 and then passes through the transparent plate 3. The light passing through the transparent plate 3 makes an image on the white diffusion layer 6 of the diffusion film 20. The image formed on the diffusion layer 6 is refracted in the vertical direction and directed to the fine a spherical lens layers 9, so that a final image with a wider viewing angle can be provided to an observer.

[The fourth embodiment]

Fig. 5 is a vertical sectional view of a rear projection screen according to a fourth embodiment according to the present invention. The structure of this embodiment is identical with that of the third embodiment except that as applied to the second embodiment, the angles , and of the fine prisms 5' of the optical plate 8'with respect to the rear surface of the transparent plate 3 consecutively vary within a range of 5 to 65 degrees in the vertical direction to form a gradient as a whole so that the light emitted from the projector P is precisely (uniformly) refracted to be directed forward, thereby ensuring a wide viewing angle and preventing the ghost phenomenon.

### Industrial Applicability

In the rear projection screen according to the present invention described above, there is no reflected image on a surface on the side of an observer even under a bright environment such as the presence of sunlight, and a extremely precise color image with a high black level can be obtained.

Further, light emitted from a projector is first refracted through a fine prism optical sheet and then diffused so that a large-sized screen with less light loss can be manufactured at a low cost.

Moreover, the present invention has advantages in that the occurrence of a ghost phenomenon is prevented with the use of different-angle fine prisms, and a wider viewing angle can be secured with the use of fine a spherical lens layers.

## Claims

1. A rear projection screen (1) for allowing an observer to view an image at a front side by receiving light projected at a rear side, comprising:
a transparent plate (3);
an optical sheet (8) hot-pressed on the rear surface of the transparent plate (3), the optical sheet (8,8') comprising a plurality of fine prisms (5,5') formed from side to side and parallel to one another to refract the light and guide the refracted light to the front side, each of the fine prisms (5,5') protruding to the rear side;
a diffusion film (20) bonded to the front surface of the transparent plate (3), the diffusion film (20) comprising a transparent film (2) and diffusion layers (6) formed on front and rear surfaces of the transparent film (2) to omnidirectionally disperse and diffuse the light refracted through the optical sheet (8,8'); and
light-shielding printed layers (4) formed on the front-side surface of the diffusion layer (6) to be horizontally parallel to one another,
**characterized in that**
the light-shielding printed layers (4) face portions between the fine prisms (5,5') of the optical sheet (8,8'), and
the fine prisms (5,5') are different-angle fine prisms (5') of which the angles defined with respect to the rear surface of the transparent plate (3) consecutively vary within a range of 5 to 65 degrees in a vertical direction to form a gradient as a whole.

2. The rear projection screen as claimed in claim 1, wherein the screen (1) has fine aspherical lens layers (9) formed to be elongated between the light-shielding printed layers (4).

3. The rear projection screen as claimed in claim 1, wherein the diffusion layer (6) of the diffusion film (20) is formed by coating and drying a solution with white powder and an acrylic binder mixed therein.

4. The rear projection screen as claimed in claim 3, wherein the white powder is selected from the group consisting of titanium dioxide, silica, calcium carbonate, aluminum hydroxide, or a combination thereof.

## Patentansprüche

1. Rückprojektionsschirm (1), der es einem Betrachter gestattet ein Bild an einer Vorderseite durch Empfangen von Licht projiziert auf die Rückseite, zu betrachten, mit:
einer transparenten Platte (3),
einer optischen Folie (8), die heißgepresst auf die Rückseite der transparenten Platte (3) ist, wobei die optische Folie (8, 8') eine Vielzahl feiner Prismen (5, 5') aufweist, die von Seite zu Seite und parallel zueinander gebildet sind, um das Licht zu brechen und um das gebrochene Licht zur Vorderseite zu führen, wobei die Prismen (5, 5') jeweils in Richtung der Rückseite hervorstehen,
einem Streuungsfilm (20), der mit der Vorderfläche der transparenten Platte (3) verbunden ist, wobei der Streuungsfilm (20) einen transparenten Film (2) und Streuungsschichten (6), die an den Vorder- und Rückflächen des transparenten Films (2) gebildet sind, um das durch die optische Folie (8, 8') gebrochene Licht ungerichtet zu verteilen und zu zerstreuen, aufweist, und
gedruckte, lichtabschirmende Schichten (4), die auf der Vorderseitenfläche der Streuungsschicht (6) gebildet sind, um horizontal parallel zueinander zu sein,
**dadurch gekennzeichnet dass**
die gedruckten, lichtabschirmenden Schichten (4) Abschnitten zwischen den feinen Prismen (5, 5') des optischen Films (8, 8') zugewandt sind, und
die feinen Prismen (5, 5'), winkelverschiedene Prismen (5') sind, bei denen die Winkel, definiert bezüglich der Rückfläche der transparenten Platte (3), fortlaufen innerhalb eines Bereiches von 5 bis 65 Grad in einer vertikalen Richtung variieren, um als Ganzes einen Gradienten zu bilden.

2. Rückprojektionsschirm gemäß Anspruch 1, bei dem der Schirm (1) feine asphärische Linsenschichten (9), die gebildet sind, um zwischen den gedruckten, lichtabschirmenden Schichten (4) gestreckt zu sein, aufweist.

3. Rückprojektionsschirm gemäß Anspruch 1, bei dem die Streuungsschicht (6) des Streuungsfilms (20) durch Beschichten und Trocknen einer Lösung mit einem darin eingemischten weißem Pulver und Akrylbindemittel, gebildet ist.

4. Rückprojektionsschirm gemäß Anspruch 3, bei dem das weiße Pulver aus einer Gruppe bestehend aus: Titandioxid, Silica, Kalziumkarbonat, Aluminiumhydroxid oder einer Kombination dieser, ausgewählt ist.

## Revendications

1. Ecran de projection (1) permettant à un observateur d'observer une image au niveau d'un côté avant en recevant la lumière projetée au niveau d'un côté arrière, comprenant:
une plaque transparente (3) ;
une feuille optique (8) pressée à chaud sur la surface arrière de la plaque transparente (3), la feuille optique (8, 8') comprenant une pluralité de prismes fins (5, 5') formés côte à côte et parallèles les uns aux autres afin de réfracter la lumière et guider la lumière réfractée vers le côté avant, chacun des prismes fins (5, 5') faisant saillie vers le côté arrière ;
un film de diffusion (20) lié à la surface avant de la plaque transparente (3), le film de diffusion (20) comprenant un film transparent (2) et des couches de diffusion (6) formées sur des surfaces avant et arrière du film transparent (2) afin de disperser et de diffuser de manière omnidirectionnelle la lumière réfractée à travers la feuille optique (8, 8'), et
des couches imprimées (4) de protection contre la lumière formées sur la surface du côté avant de la couche de diffusion (6) pour être horizontalement parallèles les unes aux autres,
**caractérisé en ce que**
les couches imprimées (4) de protection contre la lumière sont opposées à des parties entre les prismes fins (5, 5') de la feuille optique (8, 8'), et
les prismes fins (5, 5') sont des prismes fins (5') à angles différents dont les angles définis par rapport à la surface arrière de la plaque transparente (3) varient consécutivement dans une plage allant de 5 à 65 degrés dans une direction verticale pour former un gradient dans l'ensemble.

2. Ecran de projection tel que revendiqué dans la revendication 1, dans lequel l'écran (1) comporte des couches de lentille asphérique fines (9) formées pour être allongées entre les couches imprimées (4) de protection contre la lumière.

3. Ecran de projection tel que revendiqué dans la revendication 1, dans lequel la couche de diffusion (6) du film de diffusion (20) est formée par revêtement et séchage d'une solution avec une poudre blanche et un liant acrylique mélangés dans celle-ci.

4. Ecran de projection tel que revendiqué dans la revendication 3, dans lequel la poudre blanche est choisie parmi le groupe constitué de dioxyde de titane, de silice, de carbonate de calcium, d'hydroxyde d'aluminium, ou d'une combinaison de ceux-ci.
